# EUROPEAN PATENT APPLICATION

(11) **EP 4 831 242 A1**
(43) Date of publication of application: **28.10.2026**
(21) Application number: 26173392.7
(22) Date of filing: 20.04.2026
(51) Int. Cl.: C08L 33/08, C08K 3/34, C08K 3/36, C08K 5/5445, C08K 5/00

(54) **ACRYLIC RUBBER COMPOSITION**

(30) Priority: 21.04.2025 JP 2025069859
(71) Applicant: Nakanishi Metal Works Co., Ltd., Osaka-shi, Osaka 530-8566 (JP)
(72) Inventor: KOJIMA, Yasuhiko, Osaka, 530-8566 (JP); SHIMAZAKI, Nao, Osaka, 530-8566 (JP)
(74) Representative: Ter Meer und Partner mbB

(57) **Abstract**

Provided are: a novel acrylic rubber composition that has a high heat resistance equivalent to a heat resistance of fluororubber, and has rubber characteristics equivalent to rubber characteristics of conventional acrylic rubbers; and a rubber molded product that is obtained by curing the acrylic rubber composition, and has excellent heat resistance. The acrylic rubber composition contains: an acrylic rubber; 0.15 to 8.0 parts by mass of an unmodified silicone compound per 100 parts by mass of the acrylic rubber; and 0.15 to 3.5 parts by mass of a silane coupling agent per 100 parts by mass of the acrylic rubber. A rubber molded product obtained by curing the acrylic rubber composition.

## Description

### BACKGROUND OF THE INVENTION

### Field of the Invention

The present invention relates to a novel acrylic rubber composition. More specifically, the present invention relates to: an acrylic rubber composition having a heat resistance equivalent to a heat resistance of fluororubber and having a lower dynamic friction coefficient than fluororubber; and a rubber material having excellent heat resistance. Description of the Background Art

The adverse effect of organic fluorine compounds (PFAS) on the environment and human bodies has become a social issue in recent years. In view of this issue, the European Chemicals Agency (ECHA) published a restriction proposal for completely restricting ten thousand types of PFAS in 2023. In particular, there has been a concern over influence on fluororubber parts used in high-temperature ranges.

Meanwhile, it has been known that acrylic rubber compositions have excellent heat resistance and oil resistance and thus are used for hose parts and seal parts in engine compartments of automobiles. For such acrylic rubber compositions, there has been known an acrylic rubber composition having an acrylic rubber and a silicone oil made into a functional group, in which the silicone oil has a blending amount of 0.3 to 30 parts by mass per 100 parts by mass of the acrylic rubber (Patent Literature (PTL) 1).

### CITATION LIST

### [PATENT LITERATURE]

[PTL 1] International Publication No. WO2011/021641

### SUMMARY OF THE INVENTION

### PROBLEMS TO BE SOLVED BY THE INVENTION

The present inventors conducted thorough studies and found that fluororubber had excellent heat resistance and processability, but the restrictions on the PFAS raised a concern about sustainable supply of fluororubber. Rubber materials having a heat resistance equivalent to the heat resistance of fluororubber include silicone rubber. In general, however, silicone rubber tends to have lower mechanical strengths such as tensile strength and wear resistance than other rubber materials. Thus, use of silicone rubber is limited.

In view of the above, an object of the present invention is to provide: a novel acrylic rubber composition that has a high heat resistance equivalent to that of fluororubber and has rubber characteristics equivalent to those of conventional acrylic rubbers; and a rubber material that is obtained by curing the acrylic rubber composition and has excellent heat resistance.

### SOLUTION TO THE PROBLEMS

The present inventors conducted thorough studies in view of these circumstances. As a result, the present inventors have found that a novel acrylic rubber composition having a high heat resistance equivalent to that of fluororubber and rubber characteristics equivalent to those of conventional acrylic rubbers can be produced by adjusting the blending amount of each of an unmodified silicone compound and a silane coupling agent to fall within a predetermined range with respect to an acrylic rubber Consequently, the present inventors have completed the present invention.

Specifically, the present invention encompasses the following aspects.
(1) An acrylic rubber composition containing: an acrylic rubber; 0.15 to 8.0 parts by mass of an unmodified silicone compound per 100 parts by mass of the acrylic rubber; and 0.15 to 3.5 parts by mass of a silane coupling agent per 100 parts by mass of the acrylic rubber.
(2) The acrylic rubber composition according to the aforementioned (1), further containing 0.3 to 5.0 parts by mass of a phosphite-based oxide as an anti-aging agent.
(3) The acrylic rubber composition according to the aforementioned (1) or (2), further containing 0.4 to 1.0 parts by mass of a crosslinking agent.
(4) The acrylic rubber composition according to any one of the aforementioned (1) to (3), wherein the unmodified silicone compound is a silicone resin containing polydimethylsiloxane or a silicone oil containing polydimethylsiloxane.
(5) The acrylic rubber composition according to any one of the aforementioned (1) to (4), containing no organic fluorine compound.
(6) A rubber molded product obtained by curing the acrylic rubber composition according to any one of the aforementioned (1) to (5).
(7) The rubber molded product according to the aforementioned (6), in which the rubber molded product is a heat-resistant rubber material.

### ADVANTAGEOUS EFFECTS OF THE INVENTION

Use of the acrylic rubber composition of the present invention enables efficient production of a rubber molded product having an excellent heat resistance equivalent to a heat resistance of fluororubber.

A rubber material made of the rubber molded product of the present invention is suitably usable for, for example: various hose materials such as oil cooler hoses, air duct hoses, power steering hoses, control hoses, inter-cooler hoses, torque converter hoses, oil return hoses, and heat-resistant hoses; fuel hose materials; sealing members usable for various portions of machines; various diaphragms; rubber plates; belts; oil level gauges; hose masking; coating materials such as pipe heat insulating materials; rolls; sealing boots; hoses; and the like.

Among these uses, specific examples of the sealing members include automobile parts, such as bearing sealing members usable for: auxiliary machines (an alternator, an air conditioner, and the like) on the periphery of an engine; and underbody parts. Examples of the bearing sealing members include: sealing materials such as seals for shaft bearings, bearing seals, valve stem seals, various oil seals, O-rings, packings, and gaskets to be mounted to an alternator, a magnetic clutch, a belt pulley, or the like.

### DESCRIPTION OF THE PREFERRED EMBODIMENTS

An acrylic rubber composition of the present invention contains: an acrylic rubber; 0.15 to 8.0 parts by mass of an unmodified silicone compound per 100 parts by mass of the acrylic rubber; and 0.15 to 3.5 parts by mass of a silane coupling agent per 100 parts by mass of the acrylic rubber.

Examples of the acrylic rubber in the present invention include, but are not particularly limited to: a copolymer containing an acrylic acid ester as a main component; a copolymer containing a methacrylic acid ester as a main component; a copolymer of an acrylic acid ester and a methacrylic acid ester; and the like.

A rubber that contains, as a main component, the acrylic acid ester and is used for the rubber composition of the present invention may be a polymer or a copolymer of any of commercially available acrylic acid esters including crosslinking points of carboxyl groups, active chlorine, epoxy groups, or the like. Any of these commercially available products may be used in the present invention.

A polymer or a copolymer of an acrylic acid ester including crosslinking points of carboxyl groups is further preferable.

Also, an ethylene acrylic rubber (AEM) as a copolymer with ethylene, or an acrylic rubber (ANM) containing an acrylonitrile (AN) composition, may be used as the rubber containing the acrylic acid ester as a main component.

Examples of the acrylic acid ester include, but are not particularly limited to: alkyl acrylates such as methyl acrylate, ethyl acrylate, n-propyl acrylate, isopropyl acrylate, n-butyl acrylate, isobutyl acrylate, n-hexyl acrylate, 2-ethylhexyl acrylate, and cyclohexyl acrylate; and alkoxyalkyl acrylates such as methoxymethyl acrylate, ethoxymethyl acrylate, 2-methoxyethyl acrylate, 2-ethoxyethyl acrylate, 2-butoxyethyl acrylate, and 3-methoxypropyl acrylate.

Examples of the methacrylic acid ester include, but are not particularly limited to, alkyl methacrylates, and alkoxyalkyl methacrylates.

The content of the acrylic acid ester or the methacrylic acid ester in the acrylic rubber is not particularly limited.

A commercially available product may be used as the acrylic rubber, and examples of the commercially available product include, but are not particularly limited to, the Nipol (registered trademark) AR series manufactured by ZEON CORPORATION, the DENKA ER (registered trademark) series manufactured by Denka Company Limited, and the CT series manufactured by OSAKA SODA CO., LTD.

Examples of the unmodified silicone compound to be used in the present invention include unreactive silicone oils such as polydimethylsiloxane (PDMS), polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, and phenyl-modified silicone oil.

The unmodified silicone compound is merely required to be a silicone resin containing polydimethylsiloxane as a main component or a silicone oil containing polydimethylsiloxane as a main component (dimethyl silicone oil).

Examples of the form of the PDMS include, but are not particularly limited to, two types including silicone resin and silicone rubber.

In the present invention, the silicone resin refers to a silicone in the form of varnish or grease, and examples of the silicone resin include the KE series manufactured by Shin-Etsu Chemical Co., Ltd.

The silicone rubber refers to a silicone in the form of rubber, and examples of the silicone rubber include the KF series manufactured by Shin-Etsu Chemical Co., Ltd., the BY27 series manufactured by TORAY INDUSTRIES, INC., and TOSPEARL manufactured by Momentive Performance Materials Japan LLC.

The silicone oil refers to a liquid substance containing polydimethylsiloxane as a main component, and examples of the silicone oil include the KF series manufactured by Shin-Etsu Chemical Co., Ltd.

The content of the unmodified silicone compound in the acrylic rubber composition of the present invention is 0.15 to 8.0 parts by mass per 100 parts by mass of the acrylic rubber.

In a case where the content is less than 0.15 parts by mass, the torque of the acrylic rubber composition tends to become high. Meanwhile, in a case where the content is more than 8.0 parts by mass, a heat resistance does not deteriorate, but normal states TB and EB tend to decrease.

The content is preferably 0.25 to 5.0 parts by mass from the viewpoint of obtaining excellent heat resistance and processability.

The silane coupling agent to be used in the present invention is not particularly limited as long as the silane coupling agent is used as a coupling agent for the acrylic rubber. Examples of the silane coupling agent include: silane coupling agents such as vinyl-based silane coupling agents, amino-based silane coupling agents, epoxy-based silane coupling agents, and mercapto-based silane coupling agents; and zirconia-based silane coupling agents. The silane coupling agent is particularly preferably aminosilane.

A commercially available product may be used as the silane coupling agent.

The content of the silane coupling agent in the acrylic rubber composition of the present invention is 0.15 to 3.5 parts by mass per 100 parts by mass of the acrylic rubber.

In a case where the content is less than 0.15 parts by mass, the acrylic rubber composition becomes inferior in the heat resistance thereof. Meanwhile, in a case where the content is more than 3.5 parts by mass, a scorch is easily formed, whereby the processability of the acrylic rubber composition tends to deteriorate.

The content is preferably 0.25 to 3.0 parts by mass from the viewpoint of obtaining excellent heat resistance and processability.

In addition, appropriate amounts of various additives such as an anti-aging agent, a crosslinking agent, a crosslinking accelerator, a crosslinking aid, a processing aid, a reinforcing agent, a plasticizer, a metal oxide, a softener, a flame retardant, and an ultraviolet absorber may be ordinarily blended, in addition to the above components, into the acrylic rubber composition of the present invention within such a range as not to impair the advantageous effect of the present invention.

Examples of the anti-aging agent include phosphite-based anti-aging agents, diphenylamine-based anti-aging agents, naphthylamine-based anti-aging agents, p-phenylenediamine-based anti-aging agents, quinoline-based anti-aging agents, hydroquinone derivative-based anti-aging agents, mono-, bis-, tris-, or poly-phenol-based anti-aging agents, thiobisphenol-based anti-aging agents, hindered phenol-based anti-aging agents, phosphorous acid ester-based anti-aging agents, imidazole-based anti-aging agents, and nickel dithiocarbamate-based anti-aging agents. Each of these types of anti-aging agents may be used alone, or two or more of these types of anti-aging agents may be used in combination.

The crosslinking agent only has to be for the acrylic rubber, and examples of the crosslinking agent include, but are not particularly limited to, aliphatic polyamine crosslinking agents, and aromatic polyamine crosslinking agents. Examples of the aliphatic polyamine crosslinking agents include, but are not particularly limited to, hexamethylenediamine, hexamethylenediamine carbamate, N,N'-dicinnamylidene-1,6-hexamethylenediamine, N,N'-dicinnamylidene-1,6-hexamethylenediamine carbamate, tetramethylenepentamine, hexamethylenediamine-cinnamaldehyde adducts, and hexamethylenediamine-dibenzoate.

Examples of the aromatic polyamine crosslinking agents include, but are not particularly limited to, 4,4'-methylenedianiline, m-phenylenediamine, p-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetri(aminomethyl), 4,4'-oxyphenyldiphenylamine, and 4,4'-methylenebis(o-chloroaniline).

Alternatively, zinc dimethyldithiocarbamate, zinc diethyldithiocarbamate, zinc din-butyldithiocarbamate, zinc ethylphenyldithiocarbamate, zinc butylphenyldithiocarbamate, or the like may also be used as the crosslinking agent.

In the case of using the crosslinking agent, a crosslinking accelerator, a crosslinking aid, or the like may also be used. Examples of the crosslinking accelerator can include: sulfenamide-based compounds such as N-cyclohexyl-2-benzothiazolylsulfenamide, N-oxydiethylene-2-benzothiazolylsulfenamide, and N,N-diisopropyl-2-benzothiazolylsulfenamide; thiazole-based compounds such as 2-mercaptobenzothiazole, 2-(2',4'-dinitrophenyl)mercaptobenzothiazole, 2-(4'-morpholinodithio)benzothiazole, and dibenzothiazyl disulfide; guanidine compounds such as diphenylguanidine, diorthotolylguanidine, diorthonitrile guanidine, orthonitrile biguanide, and diphenylguanidine phthalate; aldehyde amines or aldehyde-ammonia-based compounds such as acetaldehyde-aniline reaction products, butyraldehyde-aniline condensates, hexamethylenetetramine, and acetaldehyde ammonia; imidazoline-based compounds such as 2-mercaptoimidazoline; thiourea-based compounds such as thiocarbanilide, diethylthiourea, dibutylthiourea, trimethylthiourea, and diorthotolylthiourea; thiuram-based compounds such as tetramethylthiuram monosulfide, tetramethylthiuram disulfide, tetraethylthiuram disulfide, tetrabutylthiuram disulfide, tetraoctylthiuram disulfide, and pentamethylenethiuram tetrasulfide; dithioic acid salt-based compounds such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate, and tellurium dimethyldithiocarbamate; xanthate-based compounds such as zinc dibutylxanthate; and compounds such as zinc oxide.

Specific examples of the crosslinking aid include: quinone dioxime-based compounds such as p-quinone dioxime; methacrylate-based compounds such as polyethylene glycol dimethacrylate; allyl-based compounds such as diallyl phthalate and triallyl cyanurate; maleimide-based compounds; divinylbenzene; and the like.

Examples of the processing aid include stearic acid, oleic acid, lauric acid, zinc stearate, calcium stearate, potassium stearate, sodium stearate, and stearylamine. Each of these processing aids may be used alone, or two or more of these processing aids may be used in combination.

Examples of the reinforcing agent include carbon black, silicon dioxide (silica), silicate minerals such as wollastonite, clay, diatomaceous earth, calcium carbonate, magnesium silicate, barium sulfate, fibers, organic reinforcing agents, and organic fillers.

Examples of the plasticizer include: phthalic acid esters such as dimethyl phthalate, diethyl phthalate, dibutyl phthalate, diisobutyl phthalate, dioctyl phthalate, butyl octyl phthalate, di-(2-ethylhexyl)phthalate, diisooctyl phthalate, and diisodecyl phthalate; fatty acid esters such as dimethyl adipate, diisobutyl adipate, di-(2-ethylhexyl)adipate, diisooctyl adipate, diisodecyl adipate, octyl decyl adipate, di-(2-ethylhexyl)azelate, diisooctyl azelate, diisobutyl azelate, dibutyl sebacate, di-(2-ethylhexyl)sebacate, and diisooctyl sebacate; and trimellitic acid esters such as isodecyl trimellitate, octyl trimellitate, n-octyl trimellitate, and trimellitic acid-based isononyl esters. Other examples of the plasticizer include di-(2-ethylhexyl)fumarate, diethylene glycol monooleate, glyceryl monoricinoleate, trilauryl phosphate, tristearyl phosphate, tri-(2-ethylhexyl)phosphate, epoxidized soybean oil, and polyether esters. Each of these plasticizers may be used alone, or two or more of these plasticizers may be used in combination.

Examples of the metal oxide can include zinc oxide, active zinc oxide, surface-treated zinc oxide, zinc carbonate, composite zinc oxide, composite active zinc oxide, surface-treated magnesium oxide, magnesium oxide, calcium hydroxide, ultrafine calcium hydroxide, lead monoxide, minium, and white lead. Each of these metal oxides may be used alone, or two or more of these metal oxides may be used in combination.

Examples of the softener include petroleum-based softeners, and vegetable oil-based softeners. Examples of the petroleum-based softeners include aromatic-based softeners, naphthene-based softeners, and paraffin-based softeners. Examples of the vegetable oil-based softeners include castor oil, cottonseed oil, linseed oil, rapeseed oil, soybean oil, palm oil, coconut oil, peanut oil, and Japan wax. Each of these softeners may be used alone, or two or more of these softeners may be used in combination.

In particular, the acrylic rubber composition of the present invention contains 0.3 to 5.0 parts by mass of a phosphite-based oxide as the anti-aging agent per 100 parts by mass of the acrylic rubber, so as to easily exhibit excellent heat resistance.

The content of the phosphite-based oxide is preferably 0.5 to 3.0 parts by mass.

In addition, the acrylic rubber composition of the present invention contains 0.4 to 1.0 parts by mass of the crosslinking agent per 100 parts by mass of the acrylic rubber, so as to easily exhibit excellent heat resistance.

The content of the crosslinking agent is preferably 0.46 to 1.0 parts by mass.

The acrylic rubber composition of the present invention is a composition containing no organic fluorine compound.

In the present invention, containing no organic fluorine compound means that the content of any organic fluorine compound is 0% by mass.

A method of producing the rubber composition of the present invention is not particularly limited. For example, the acrylic rubber, the unmodified silicone compound, the silane coupling agent, and, as necessary, the various additives such as the anti-aging agent, a vulcanizing agent, the crosslinking agent, the crosslinking accelerator, the crosslinking aid, the processing aid, the reinforcing agent, the plasticizer, the metal oxide, the softener, the flame retardant, and the ultraviolet absorber, are combined and mixed. These components are kneaded preferably at 10 to 200°C and more preferably at 20 to 170°C with a mixer such as a Banbury mixer, a Brabender mixer, an intermixer, or a kneader. Then, the resultant mixture is transferred to a roll or the like. The vulcanizing agent, a vulcanization aid that is unstable with respect to heat, and the like are added to the mixture, and secondary kneading is performed preferably under a condition of 10 to 80°C. Consequently, the rubber composition can be produced.

A rubber molded product can be obtained by curing the acrylic rubber composition of the present invention containing the aforementioned components.

The curing only has to involve, for example, performing vulcanization treatment on the acrylic rubber composition according to a publicly-known technique. After the vulcanization treatment, any type of molding is performed, whereby a rubber molded product can be obtained.

The vulcanization treatment is preferably performed by divided primary vulcanization and secondary vulcanization. The temperature condition for the vulcanization treatment is not particularly limited, but both the primary vulcanization and the secondary vulcanization are preferably performed within a range of 140 to 180°C. The time for the vulcanization treatment is not particularly limited, but the primary vulcanization and the secondary vulcanization are preferably performed for 10 to 30 minutes and 1 to 24 hours, respectively.

For the aforementioned vulcanization, means commonly employed for rubber vulcanization such as steam vulcanization, press vulcanization, or oven vulcanization may be selected, as appropriate.

The rubber molded product formed from the rubber composition of the present invention having been obtained as described above is suitably usable for: various hose materials such as oil cooler hoses, air duct hoses, power steering hoses, control hoses, inter-cooler hoses, torque converter hoses, oil return hoses, and heat-resistant hoses; fuel hose materials; sealing members usable for various portions of machines; various diaphragms; rubber plates; belts; oil level gauges; hose masking; coating materials such as pipe heat insulating materials; rolls; sealing boots; hoses; and the like.

Among them, specific examples of the sealing members include automobile parts, such as bearing sealing members usable for: auxiliary machines (an alternator, an air conditioner, and the like) on the periphery of an engine; underbody parts; and the like. Examples of the bearing sealing members include sealing materials such as seals for shaft bearings, bearing seals, valve stem seals, various oil seals, O-rings, packings, and gaskets to be mounted to an alternator, a magnetic clutch, a belt pulley, or the like.

### EXAMPLES

Next, specific Examples of the present invention will be described, but the present invention is not particularly limited to these Examples.

Components used for each of the Examples and Comparative Examples are as follows.

### [Acrylic Rubber]

· Copolymer 1: Nipol (registered trademark) series (as an acrylic-based copolymer) manufactured by ZEON CORPORATION
· Copolymer 2: DENKA ER (registered trademark) series (as an acrylic-based copolymer) manufactured by Denka Company Limited

### [Silicone Oil and Silicone Resin]

· Silicone oil 1: "KF96-300CS" (main component: PDMS) manufactured by Shin-Etsu Chemical Co., Ltd.
· Silicone oil 2: carboxyl-modified silicone oil (main component: not PDMS) manufactured by Shin-Etsu Chemical Co., Ltd.
· Silicone polymer: "KE-5625-U" (main component: PDMS) manufactured by Shin-Etsu Chemical Co., Ltd.

### [Silane Coupling Agent]

· Silane coupling agent: aminosilane

### [Various Additives]

· Anti-aging agent 1: diphenylamine-based compound (4'-bis(α,α-dimethylbenzyl)diphenylamine)
· Anti-aging agent 2: phosphite-based oxide
· Processing aid 1: stearic acid
· Processing aid 2: stearylamine
· Reinforcing agent 1: carbon black
· Reinforcing agent 2: silicon dioxide
· Reinforcing agent 3: wollastonite
· Softener: liquid paraffin
· Crosslinking agent 1: 2,2-bis[4-(4-aminophenoxy)phenyl]propane
· Crosslinking agent 2: hexamethylenediamine carbamate
· Crosslinking accelerator: di-o-tolylguanidine

### (Examples 1 to 20)

The components indicated in Table 1 presented below (excluding the vulcanizing agent, crosslinking agent, and crosslinking accelerator) were mixed. The resultant mixture was transferred to an 8-inch open roll. The vulcanizing agent, the crosslinking agent, the crosslinking accelerator, and the like were added to the mixture, and kneading was performed. Consequently, an acrylic rubber composition was obtained.

Next, the obtained acrylic rubber composition was kneaded with a mixing roll and then cured through primary vulcanization (at 150 to 180°C for 10 to 15 minutes) and secondary vulcanization (at 150 to 180°C for 1 to 10 hours). The cured product was molded into a sheet shape. Consequently, a rubber sheet (rubber molded product) having a thickness of 2 mm was obtained.

### (Comparative Examples 1 to 10)

An acrylic rubber composition was produced in the same manner as in Example 1, except that the components indicated in Table 2below were used. Then, the obtained acrylic rubber composition was cured, and the cured product was molded into a sheet shape. Consequently, a rubber sheet (rubber molded product) having a thickness of 2 mm was obtained.

### (Reference Examples 1 and 2)

In addition, rubber sheets formed from a commercially available fluororubber (Reference Example 1) and a commercially available silicone rubber (Reference Example 2) were produced as control articles.

### (Test Example 1) Heat resistance test 1: heat aging measurement evaluation

According to JIS K 6257, a heat aging test was started for each of the rubber sheets in Examples 1 to 20, Comparative Examples 1 to 10, and Reference Examples 1 and 2 under a condition of 190°C, and a hardness change amount (ΔHS) and a tensile elongation change amount (ΔEB) were calculated. The hardness change amount (ΔHS) was an amount by which a hardness obtained 168 hours after the start differed from an initial value. The tensile elongation change amount (ΔEB) was an amount by which a tensile elongation obtained 168 hours after the start differed from an initial value. The obtained results are indicated in Tables 1 and 2.

### (Evaluation Criteria)

"Excellent": change amount ΔHS being +5 points or less
"Good": change amount ΔHS being +9 points or less and +6 points or more
"Poor": change amount ΔHS being +10 points or more

### (Test Example 2) Tensile evaluations of a normal-state TB and a normal -state EB were determined according to JIS K 6251.

The normal-state TB and the normal-state EB of each of the rubber sheets in Examples 1 to 20, Comparative Examples 1 to 10, and Reference Examples 1 and 2 were measured through normal methods and were each evaluated based on the following criteria.

### (Evaluation Criteria)

"Good": TB being 8.5 MPa or more
"Poor": TB being less than 8.5 MPa
(Evaluation Criteria)
"Good": EB being less than 150%
"Poor": EB being 150% or more

### (Test Example 3) A normal-state hardness was measured with a type A durometer according to JIS K 6253.

The normal-state hardness of each of the rubber sheets in Examples 1 to 20, Comparative Examples 1 to 10, and Reference Examples 1 and 2 was measured through a normal method and was evaluated based on the following criteria. The results are indicated in Tables 1 and 2.

### (Evaluation Criteria)

"Good": 64 points or more
"Poor": less than 64 points

### (Test Example 4) Dynamic friction coefficient (µ)

The friction coefficient of each of the rubber sheets in Examples 1 to 20, Comparative Examples 1 to 10, and Reference Examples 1 and 2 was measured according to JIS K 7125: 1999 "Plastics - Film and sheeting - Determination of the coefficients of friction".

The test shape was set to 63 mm × 63 mm × 2 mm. The test temperature was adjusted to 23°C ± 2°C.

Dynamic friction coefficients as test results were obtained through relative evaluation and were determined based on the following criteria. The obtained results are indicated in Tables 1 and 2.

### (Evaluation Criteria)

"Poor": 3.0 or more
"Good": less than 3.0

### (Test Example 5) Productivity (vulcanization speed)

It is known that a significant onset of cure time (T10) leads to elongation of the production time and thus leads to deterioration of productivity.

In view of this, T10 at 160°C of each of the rubber sheets in Examples 1 to 20, Comparative Examples 1 to 10, and Reference Examples 1 and 2 was measured through a normal method and was evaluated based on the following criteria. The obtained results are indicated in Tables 1 and 2.

### (Evaluation Criteria)

"Good": less than 2.7
"Poor": 2.7 or more

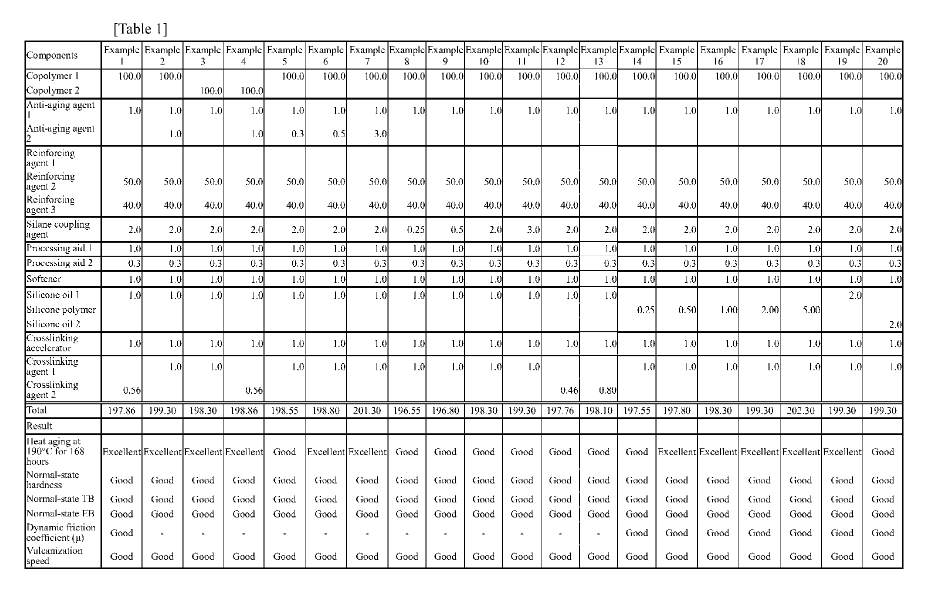

**[Table 2]**

| Components | Reference Example 1 | Reference Example 2 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Copolymer 1 | | | 100.0 | 100.0 | 100.0 | 100.0 | 100.0 | 100.0 | 100.0 | 100.0 | 100.0 | 100.0 |
| Copolymer 2 | | | | | | | | | | | | |
| Anti-aging agent 1 | | | 1.0 | 1.0 | 1.0 | 1.0 | 1.0 | 1.0 | 1.0 | 1.0 | 1.0 | 1.0 |
| Anti-aging agent 2 | | | | | | | 0.0 | 10.0 | | | | |
| Reinforcing agent 1 | | | 60.0 | 60.0 | 60.0 | 60.0 | | | | | | |
| Reinforcing agent 2 | | | | | | | 50.0 | 50.0 | 50.0 | 50.0 | 50.0 | 50.0 |
| Reinforcing agent 3 | | | | | | | 40.0 | 40.0 | 40.0 | 40.0 | 40.0 | 40.0 |
| Silane coupling agent | | | | | | | 2.0 | 2.0 | 0.0 | 4.0 | 2.0 | 2.0 |
| Processing aid 1 | | | 1.0 | 1.0 | 1.0 | 1.0 | 1.0 | 1.0 | 1.0 | 1.0 | 1.0 | 1.0 |
| Processing aid 2 | | | 0.3 | 0.3 | 0.3 | 0.3 | 0.3 | 0.3 | 0.3 | 0.3 | 0.3 | 0.3 |
| Softener | | | 1.0 | 1.0 | 1.0 | 1.0 | 1.0 | 1.0 | 1.0 | 1.0 | 1.0 | 1.0 |
| Silicone oil 1 | | | 1.0 | 5.0 | | | 0.0 | 0.0 | 1.0 | 1.0 | 0.0 | |
| Silicone polymer Silicone oil 2 | | | | | 1.0 | 5.0 | | | | | | 10.00 |
| Crosslinking accelerator | | | 1.0 | 1.0 | 1.0 | 1.0 | 1.0 | 1.0 | 1.0 | 1.0 | 1.0 | 1.0 |
| Crosslinking agent 1 | | | 1.0 | 1.0 | 1.0 | 1.0 | 1.0 | 1.0 | 1.0 | 1.0 | | 1.0 |
| Crosslinking agent 2 | | | | | | | | | | | 0.10 | |
| Total (parts by weight) | | | 166.30 | 170.30 | 166.30 | 170.30 | 197.30 | 207.30 | 196.30 | 200.30 | 196.40 | 207.30 |

| Result | | | | | | | | | | | | |
|---|---|---|---|---|---|---|---|---|---|---|---|---|
| Heat aging at 190°C for 168 hours | Excellent | Excellent | Poor | Poor | Poor | Poor | Poor | Excellent | Poor | Good | Poor | Excellent |
| Normal-state hardness | Good | Good | Good | Good | Good | Good | Good | Poor | Good | Good | Good | Good |
| Normal-state TB | Good | Poor | Good | Good | Good | Poor | Good | Good | Good | Good | Poor | Poor |
| Normal-state EB | Good | Good | Good | Good | Good | Good | Good | Good | Good | Poor | Poor | Poor |
| Dynamic friction coefficient (µ) | Poor | Good | | | | | Poor | Poor | | | | Good |
| Vulcanization speed | Good | Good | Poor | Poor | Poor | Poor | Good | Good | Good | Good | Poor | Good |

According to the results indicated in Tables 1 and 2, each of the acrylic rubber compositions obtained in Examples 1 to 20 had a high heat resistance equivalent to those of the fluororubber (Reference Example 1) and the silicone rubber (Reference Example 2), and had a normal-state hardness, a normal-state EB, and a vulcanization speed which were equivalent to those of the fluororubber and the silicone rubber. Thus, it has been found that these acrylic rubber compositions were excellent in processability and productivity.

In addition, each of the acrylic rubber compositions obtained in Examples 1 and 14 to 20 had a lower dynamic friction coefficient than the fluororubber (Reference Example 1). Thus, it has been found that these acrylic rubber compositions had excellent torque characteristics.

In addition, each of the acrylic rubber compositions obtained in Examples 1 to 20 had a higher normal-state TB than the silicone rubber (Reference Example 2). Thus, it has been found that these acrylic rubber compositions had excellent tensile strength upon cutting.

Accordingly, the acrylic rubber compositions obtained in Examples 1 to 20 were novel acrylic rubber compositions that are suitably usable as substitutes for the fluororubber and the silicone rubber, and have rubber characteristics equivalent to those of conventional acrylic rubbers.

Meanwhile, it has been found that, in a case where the content of the unmodified silicone compound was less than 0.15 parts by mass (Comparative Examples 5, 6, and 9) or more than 8.0 parts by mass (Comparative Example 10) per 100 parts by mass of the acrylic rubber or in a case where the content of the silane coupling agent was less than 0.15 parts by mass (Comparative Examples 1 to 4 and 7) or more than 3.5 parts by mass (Comparative Example 8) per 100 parts by mass of the acrylic rubber, one or more of the results such as the heat resistance, the normal-state hardness, the normal-state TB, the normal-state EB, the dynamic friction coefficient, and the vulcanization speed were lower than the corresponding results of the acrylic rubber compositions obtained in Examples 1 to 20.

## Claims

1. An acrylic rubber composition comprising:
an acrylic rubber;
0.15 to 8.0 parts by mass of an unmodified silicone compound per 100 parts by mass of the acrylic rubber; and
0.15 to 3.5 parts by mass of a silane coupling agent per 100 parts by mass of the acrylic rubber.

2. The acrylic rubber composition according to claim 1, further comprising 0.3 to 5.0 parts by mass of a phosphite-based oxide as an anti-aging agent.

3. The acrylic rubber composition according to claim 1 or 2, further comprising 0.4 to 1.0 parts by mass of a crosslinking agent.

4. The acrylic rubber composition according to claim 1 or 2, wherein the unmodified silicone compound is a silicone resin containing polydimethylsiloxane or a silicone oil containing polydimethylsiloxane.

5. The acrylic rubber composition according to claim 1 or 2, containing no organic fluorine compound.

6. A rubber molded product obtained by curing the acrylic rubber composition according to claim 1 or 2.

7. The rubber molded product according to claim 6, wherein the rubber molded product is a heat-resistant rubber material.
